(19) Europäisches Patentamt / European Patent Office / Office européen des brevets

(11) **EP 4 428 966 A1**

(12) **EUROPEAN PATENT APPLICATION**
published in accordance with Art. 153(4) EPC

(43) Date of publication:
**11.09.2024 Bulletin 2024/37**

(21) Application number: **22901666.2**

(22) Date of filing: **23.11.2022**

(51) International Patent Classification (IPC):
**H01M 8/1058** (2016.01)  **H01M 8/106** (2016.01)
**H01M 8/1053** (2016.01)  **H01M 8/1004** (2016.01)

(52) Cooperative Patent Classification (CPC):
**H01M 8/1004; H01M 8/1053; H01M 8/1058;
H01M 8/106; Y02E 60/50**

(86) International application number:
**PCT/KR2022/018646**

(87) International publication number:
**WO 2023/101308 (08.06.2023 Gazette 2023/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.11.2021 KR 20210168578**

(71) Applicant: **Kolon Industries, Inc.**
**Seoul 07793 (KR)**

(72) Inventors:
• **PARK, Jung Hwa**
 **Seoul 07793 (KR)**
• **LEE, Dong Hoon**
 **Seoul 07793 (KR)**

• **SONG, Kum Suck**
 **Seoul 07793 (KR)**
• **YUN, Sung Hyun**
 **Seoul 07793 (KR)**
• **YUM, Seung Jib**
 **Seoul 07793 (KR)**
• **OH, Chang Hoon**
 **Seoul 07793 (KR)**
• **LEE, Hye Song**
 **Seoul 07793 (KR)**
• **LEE, Eun Su**
 **Seoul 07793 (KR)**

(74) Representative: **Ter Meer Steinmeister & Partner
Patentanwälte mbB
Nymphenburger Straße 4
80335 München (DE)**

(54) **REINFORCED COMPOSITE MEMBRANE, AND MEMBRANE-ELECTRODE ASSEMBLY AND FUEL CELL WHICH COMPRISE SAME**

(57) A reinforced composite membrane with improved ion conductivity and wettability is provided. Provided in one embodiment of the present disclosure is a reinforced composite membrane comprising a porous support and an ionomer layer, which comprises an ion conductor filling the pores inside the porous support, wherein the porous support comprises a first surface and a second surface opposite to the first surface, and the first surface is reformed to contain a first hydrophilic functional group.

## FIG.1

**Description**

**[TECHNICAL FIELD]**

The present disclosure relates to a reinforced composite membrane, a membrane-electrode assembly including the same, and a fuel cell, and more specifically, to a reinforced composite membrane having improved ionic conductivity and water retention by reforming one surface of a porous support to contain a hydrophilic functional group, a membrane-electrode assembly including the same, and a fuel cell.

**[BACKGROUND ART]**

A fuel cell is a cell that directly converts chemical energy generated by oxidation of a fuel into electrical energy, and has been highlighted as a next-generation energy source due to its high energy efficiency and low emission of pollutants.

A fuel cell generally has a structure in which an anode and a cathode are formed on both sides of a polymer electrolyte membrane interposed therebetween, and such a structure is referred to as a membrane electrode assembly (MEA).

Fuel cells can be classified into alkaline electrolyte fuel cells and polymer electrolyte membrane fuel cells (PEMFC) depending on the type of electrolyte membrane, and among them, the polymer electrolyte membrane fuel cells, due to advantages, such as a low operating temperature of below 100°C, fast start-up and response characteristics, excellent durability, *etc.,* has been highlighted as a portable power supply and power supplies for vehicles and home.

A representative example of such a polymer electrolyte membrane fuel cell is a proton exchange membrane fuel cell (PEMFC), *etc.* using hydrogen gas as fuel.

Summarizing the reactions occurring in the polymer electrolyte membrane fuel cell, first, when a fuel such as hydrogen gas is supplied to the oxidizing electrode (or an anode), hydrogen ions ($H^+$) and electrons ($e^-$) are generated by the oxidation reaction of the hydrogen gas at the oxidizing electrode. The hydrogen ions generated are transferred to the reducing electrode through the polymer electrolyte membrane, and the electrons generated are transferred to the reducing electrode (cathode) through an external circuit. Oxygen gas is supplied from the reducing electrode, and oxygen gas is combined with hydrogen ions and electrons to generate water by a reduction reaction of oxygen.

Since the polymer electrolyte membrane is a passage through which hydrogen ions generated at the oxidizing electrode are transferred to the reducing electrode, basically, the conductivity of hydrogen ions must be excellent. Additionally, the polymer electrolyte membrane must have excellent separation ability for separating hydrogen gas supplied to the oxidizing electrode and oxygen supplied to the reducing electrode, and in addition, it must have characteristics such as excellent mechanical strength, dimensional stability, chemical resistance, *etc.,* and resistance loss at high current density, low ohmic loss, *etc.*

Meanwhile, the porous support used in the conventional reinforced composite membrane does not have a hydrophilic functional group introduced to its surface, and thus, the water generated at the cathode does not diffuse well toward the anode, resulting in poor water retention of the reinforced composite membrane. As a result, there was an additional problem in that the conductivity performance of hydrogen ions that should move through water is lowered. Additionally, it is very difficult to uniformly impregnate the hydrophilic ion conductor into the superhydrophobic porous support, and even if impregnated, there is a problem in that the ion conductor and the porous support are separated.

**[DETAILED DESCRIPTION OF INVENTION]**

**[TECHNICAL PROBLEMS]**

In order to solve the above problems, an object of the present disclosure is to provide a reinforced composite membrane with improved water retention ability and ionic conductivity while maintaining dimensional stability.

In order to solve the above problems, another object of the present disclosure is to provide a reinforced composite film that guides water generated at the cathode to the anode for the purpose of a reaction or wetting.

In order to solve the above problems, still another object of the present disclosure is to provide a reinforced composite membrane in which a hydrophilic ion conductor and a hydrophobic porous support are not separated.

Still another object of the present disclosure is to provide a membrane-electrode assembly including the reinforced composite membrane.

Still another object of the present disclosure is to provide a fuel cell including the membrane-electrode assembly.

The objects of the present disclosure are not limited to the above-mentioned objects, and other objects and advantages of the present disclosure not mentioned above can be understood by the following description and will be more clearly understood by the examples of the present disclosure. Additionally, it will be readily apparent that the objects and advantages of the present disclosure may be realized by means of the instrumentalities and combinations indicated in the claims.

**[TECHNICAL SOLUTION]**

An embodiment of the present disclosure for achieving the above objects is to provide a reinforced composite membrane including a porous support and an ionomer layer including an ion conductor filling the pores inside the porous support, wherein the reinforced composite membrane is a reformed reinforced composite membrane such that the porous support includes a first surface and a second surface opposite to the first surface, wherein the first surface includes a first hydrophilic functional group.

[EFFECT OF INVENTION]

According to the present disclosure, water generated at the cathode is recovered to the anode for the purpose of a reaction or wetting, so that water retention ability and ionic conductivity can be increased. Additionally, according to the present disclosure, it is possible to solve the problem of separation between the hydrophilic ion conductor and the superhydrophobic porous support.

In addition to the above effects, specific effects of the present disclosure will be described together while describing specific details for carrying out the present disclosure.

**[BRIEF DESCRIPTION OF THE DRAWING]**

FIG. 1 is a cross-sectional view showing a reinforced composite film according to an embodiment of the present disclosure.

FIG. 2 is a cross-sectional view showing a reinforced composite film according to another embodiment of the present disclosure.

FIG. 3 is a cross-sectional view showing a membrane-electrode assembly according to an embodiment of the present disclosure.

FIG. 4 is a schematic diagram for explaining a fuel cell according to an embodiment of the present disclosure.

**[BEST MODE FOR CARRYING OUT THE INVENTION]**

Hereinafter, each configuration of the present disclosure will be described in more detail so that those skilled in the art can easily practice the same, but this is only one example, and the scope of rights of the present disclosure is not limited by the following description.

The reinforced composite membrane according to the present disclosure includes a porous support and an ionomer layer including an ion conductor filling the pores inside the porous support. The porous support includes a first surface and a second surface opposite to the first surface, and the first surface is reformed to contain a first hydrophilic functional group. The porous support used in the conventional reinforced composite membrane has a problem in that the hydrophilic functional group is not introduced to the surface, and the water generated at the cathode does not diffuse well toward the anode, so the water retention ability of the reinforced composite membrane is reduced. As a result, there was an additional problem in that the conductivity performance of hydrogen ions that should move through water is lowered. Additionally, it is very difficult to uniformly impregnate the hydrophilic ion conductor into the superhydrophobic porous support, and even if impregnated, there was a problem in that the ion conductor and the porous support are separated. According to one aspect of the present disclosure, the first surface is reformed to contain a first hydrophilic functional group, thereby recovering water generated at the cathode to the anode for the purpose of a reaction or wetting, thereby improving water retention ability and ion conductivity can be raised. According to another aspect of the present disclosure, the first surface is reformed to contain a first hydrophilic functional group, thereby solving the problem of separation of the hydrophilic ion conductor and the superhydrophobic porous support.

Hereinafter, the configuration of the present disclosure will be described in more detail with reference to the drawings.

**1. Reinforced composite membrane (50)**

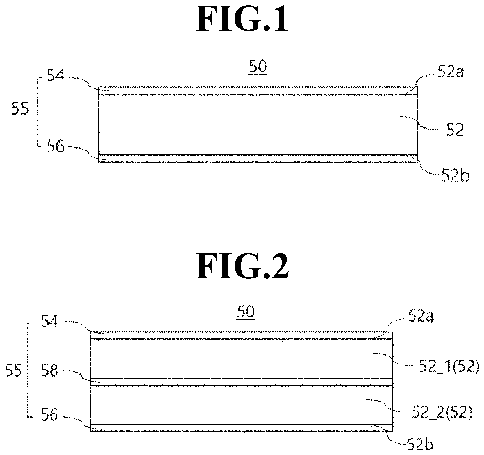

FIG. 1 is a cross-sectional view showing a reinforced composite film according to an embodiment of the present disclosure.

Referring to FIG. 1, the reinforced composite membrane 50 according to the present disclosure may include a porous support 52 and an ionomer layer 55.

The porous support 52 according to the present disclosure may include a first surface 52a and a second surface 52b opposite to the first surface 52a.

Specifically, the first surface 52a of the porous support 52 may be reformed to contain a first hydrophilic functional group. Specifically, as a method of reforming the first surface, any one method selected from the group consisting of a method of irradiation using radiation such as plasma, UV, or ion beam, gamma ray, or electron beam, and a method of reacting with chemicals may be used, and preferably, it is preferable to use the plasma method. For example, as a method for analyzing the first hydrophilic functional group introduced to the first surface 52a of the porous support 52, infrared spectroscopy or a method of measuring the contact angle of deionized water with respect to the first surface of the porous support may be used.

The first hydrophilic functional group may be any one selected from the group consisting of a hydroxy group, a carboxyl group, a sulfuric acid group, and a phosphoric acid group. By reforming the first surface 52a of the porous support 52 with a hydrophilic functional group, the wettability of the reinforced composite membrane can be improved, thereby increasing the ionic conductivity of hydrogen ions.

In order to introduce a hydroxy group into the first surface, for example, a method of supplying dry air (oxygen)/moisture may be used; in order to introduce a carboxyl group into the first surface, for example, a method of supplying carbon dioxide may be used; in order to introduce a sulfuric acid group to the first surface, for example, a sulfurous acid gas ($SO_2$) supply method may be used; and in order to introduce a phosphoric acid group to the first surface, for example, a solution injection method including a compound containing a phosphoric acid group may be used.

The second surface 52b of the porous support 52 according to an embodiment of the present disclosure may not be reformed to contain a hydrophilic functional group. Therefore, only the first surface 52a is reformed to selectively contain hydrophilic functional groups, so that water generated at the cathode can easily be transferred to the anode, and thus the water retention ability and ionic conductivity of the reinforced composite membrane can be improved. Additionally, the bonding force between the hydrophilic ion conductor and the porous support is improved, so that the problem of separation between the ion conductor and the porous support can be solved.

The contact angle of the first solvent with respect to the first surface 52a may be lower than the contact angle of the first solvent with respect to the second surface 52b. The first solvent may be any one selected from the group consisting of water, ethylene glycol, and a mixture thereof, and preferably distilled water.

Since the contact angle of the first solvent with respect to the first surface 52a is smaller than the contact angle of the first solvent with respect to the second surface 52b, the wettability of the reinforced composite film is improved, thereby increasing the ionic conductivity of hydrogen ions. Additionally, the water generated at the cathode can easily be transferred to the anode.

A contact angle of the first solvent with respect to the first surface 52a may be 75° to 105°, and a contact angle of the first solvent with respect to the second surface 52b may be 110° to 145°. Preferably, the contact angle of the first solvent with respect to the first surface 52a is 80° to 100°, and the contact angle of the first solvent with respect to the second surface 52b may be 120° to 140°.

The second surface 52b of the porous support 52 according to another embodiment of the present disclosure may be reformed to contain a second hydrophilic functional group. Specifically, the second hydrophilic functional group may be any one selected from the group consisting of a hydroxy group, a carboxyl group, a sulfuric acid group, and a phosphoric acid group. The first hydrophilic functional group and the second hydrophilic functional group may be the same as or different from each other.

However, the degree to which the second surface 52b of the porous support 52 is reformed may be smaller than that of the first surface 52a, and a method of controlling the output of the electrode in a method using plasma as a method for realizing the same may be used.

Similar to the above-described embodiment, the contact angle of the second solvent with respect to the first surface 52a may be smaller than the contact angle of the second solvent with respect to the second surface 52b. Specifically, the contact angle of the second solvent with respect to the first surface may be 75° to 105°, and the contact angle of the second solvent with respect to the second surface may be 108° to 120°. Preferably, the contact angle of the second solvent with respect to the first surface 52a is 80° to 100°, the contact angle of the second solvent with respect to the second surface 52b may be 108° to 118°, and more preferably the contact angle of the second solvent with respect to the first surface 52a may be 85° to 95°, and the contact angle of the second solvent with respect to the second surface 52b may be 110° to 115°.

The second solvent may be the same as or different from the first solvent, and preferably the same as the first solvent.

The porous support 52 according to an embodiment of the present disclosure may include a highly fluorinated polymer having excellent resistance to thermal and chemical degradation, and preferably a perfluorinated polymer, for example, may be a copolymer between polytetrafluoroethylene (PTFE) or tetrafluoroethylene and $CF_2=CFC_nF_{2n+1}$

(where n is a real number from 1 to 5) or $CF_2=CFO-(CF_2CF(CF_3)O)_mC_nF_{2n+1}$ (m is a real number from 0 to 15, and n is a real number from 1 to 15).

The porous support 52 according to another embodiment of the present disclosure may correspond to expanded polytetrafluoroethylene (e-PTFE) having a microstructure of polymeric fibrils or a microstructure in which nodes are connected to one another by fibrils. Additionally, as the porous support 52, a film having a microstructure of polymeric fibrils without the nodes may also be used.

The porous support 52 according to another embodiment of the present disclosure may include a perfluorinated polymer. The porous support 52 may correspond to a more porous and stronger porous support by extrusion molding of dispersion polymerization PTFE into a tape in the presence of a lubricant and stretching the thus-obtained material.

Additionally, by heat-treating the e-PTFE at a temperature exceeding the melting point (about 342°C) of the PTFE, the non-crystalline content of the PTFE may be increased. The e-PTFE film prepared by the above method may have micropores having various diameters and porosity. The e-PTFE film prepared by the above method may have pores of at least 35%, and the micropores may have a diameter of about 0.01 $\mu$m to about 1 $\mu$m.

The porous support 52 according to an embodiment of the present disclosure may be a non-woven fibrous web consisting of a plurality of randomly oriented fibers. The non-woven fibrous web refers to a sheet having a structure of individual fibers or filaments that are interlaid, but not in the same way as in a woven fabric. The non-woven fibrous web may be prepared by any one method selected from the group consisting of carding, garneting, air-laying, wet-laying, melt blowing, spunbonding, and stitch bonding.

The fiber may include one or more polymer materials, and generally, any polymer material may be used as long as it is used as such, and specifically, a hydrocarbon-based fiber-forming polymer material may be used. For example, the fiber-forming polymeric materials may include any one selected from the group consisting of polyolefins (e.g., polybutylene, polypropylene, and polyethylene), polyesters (e.g., polyethylene terephthalate and polybutylene terephthalate), polyamides (nylon-6 and nylon-6,6), polyurethane polybutene, polylactic acid, polyvinyl alcohol, polyphenylene sulfide, polysulfone, fluid crystalline polymers, polyethylene-co-vinylacetate, polyacrylonitrile, cyclic polyolefins, polyoxymethylene, polyolefin-based thermoplastic elastomers, and a combination thereof. However, the technical idea of the present disclosure is not limited thereto.

The porous support 52 according to an embodiment of the present disclosure may include a nanoweb in which nanofibers are integrated in the form of a non-woven fabric including a plurality of pores.

As the nanofiber, a hydrocarbon-based polymer which exhibits excellent chemical resistance and has hydrophobicity, and thus are not subject to shape deformation by moisture in a high-humidity environment, may preferably be used. Specifically, as the hydrocarbon-based polymer, any one selected from the group consisting of nylon, polyimide, polyaramid, polyetherimide, polyacrylonitrile, polyaniline, polyethylene oxide, polyethylene naphthalate, polybutylene terephthalate, styrene butadiene rubber, polystyrene, polyvinyl chloride, polyvinyl alcohol, polyvinylidene fluoride, polyvinyl butylene, polyurethane, polybenzoxazole, polybenzimidazole, polyamideimide, polyethylene terephthalate, polyphenylene sulfide, polyethylene, polypropylene, a copolymer thereof, and a mixture thereof, and among these, polyimide having more excellent heat resistance, chemical resistance, and shape stability may preferably be used.

The nanoweb is an aggregate of nanofibers in which nanofibers prepared by electrospinning are randomly arranged. In particular, considering the porosity and thickness of the nanoweb, the nanofibers measured for 50 fiber diameters using a scanning electron microscope (JSM6700F, JEOL) and calculated from the average, it is desirable to have a diameter with an average of 40 nm to 5,000 nm.

When the average diameter of the nanofibers is below the above numerical range, the mechanical strength of the porous support may be reduced, whereas when the average diameter of the nanofibers exceeds the above numerical range, the porosity may be significantly decreased and the thickness may be increased.

The thickness of the non-woven fibrous web may be 10 $\mu$m to 50 $\mu$m, and specifically 15 $\mu$m to 43 $\mu$m. When the thickness of the non-woven fibrous web is below the above numerical range, the mechanical strength may decrease, whereas when the thickness exceeds the above numerical range, resistance loss may increase, and weight reduction and integration may decrease.

The non-woven fibrous web may have a basic weight of 5 mg/cm$^2$ to 30 mg/cm$^2$. When the basis weight of the non-woven fibrous web is below the above range, visible pores are formed, making it difficult to function as a porous support, whereas when the basis weight of the non-woven fibrous web exceeds the above numerical range, it may be prepared in the form of a paper or fabric in which pores are hardly formed.

The porosity may be calculated by the ratio of the air volume in the porous support to the total volume of the porous support according to Equation 1 below. In particular, the total volume may be calculated by preparing a rectangular sample and measuring its width, length, and thickness, and the air volume may be obtained by measuring the mass of the sample and subtracting the polymer volume calculated from the density from the total volume.

[Equation 1]

$$\text{Porosity (\%)} = (\text{air volume in porous support/total volume of porous support}) \times 100$$

The porous support 52 according to the present disclosure may have a porosity of 30 % to 90%, and preferably 60 % to 85%. When the porosity of the porous support 52 is below the above numerical range, impregnation property of the ion conductor may deteriorate, whereas when the porosity of the porous support exceeds the above numerical range, shape stability may deteriorate, and thus, subsequent processes may not proceed smoothly.

The ionomer layer 55 according to the present disclosure may include an ion conductor filling the pores inside the porous support 52.

The ion conductor according to the present disclosure may be a cation conductor having a cation exchange functional group such as a hydrogen ion; or an anion conductor having an anion exchange functional group such as a hydroxy ion, carbonate, or bicarbonate. The cation exchange functional group may be any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof, and is generally sulfonic acid group or carboxyl group.

The cation conductor includes the cation exchange functional group and may include a fluorine-based polymer containing fluorine in the main chain; hydrocarbon-based polymers (e.g., benzimidazole, polyamide, polyamideimide, polyimide, polyacetal, polyethylene, polypropylene, acrylic resin, polyester, poly sulfone, polyether, polyetherimide, polyester, polyethersulfone, polyetherimide, polycarbonate, polystyrene, polyphenylenesulfide, polyetheretherketone, polyetherketone, polyarylethersulfone, polyphosphazene, polyquinoxaline, *etc.*); partially fluorinated polymers *(e.g.,* polystyrene-graft-ethylenetetrafluoroethylene copolymers, polystyrene-graft-polytetrafluoroethylene copolymers, etc.); sulfone imides; a mixture thereof; *etc.*

More specifically, when the cation conductor is a hydrogen ion cation conductor, the polymers may include a cation exchange group selected from the group consisting of a sulfonic acid group, a carboxylic acid group, a phosphoric acid group, a phosphonic acid group, and a derivative thereof in their side chains, and specific examples may include fluorine-based polymers which include poly(perfluorosulfonic acid), poly(perfluorocarboxylic acid), a copolymer of tetrafluoroethylene containing a sulfonic acid group and fluorovinyl ether, defluorinated sulfurized polyether ketone, or a mixture thereof; hydrocarbon-based polymers which include sulfonated polyimide (S-PI), sulfonated polyarylethersulfone (S-PAES), sulfonated polyetheretherketone (S-PEEK), sulfonated polybenzimidazole (S-PBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof. However, the technical idea of the present disclosure is not limited thereto.

The anion conductor, which is a polymer capable of transporting anions (e.g., hydroxy ions), is commercially available in the form of a hydroxide or halide (usually chloride), and the anion conductor and may be used for industrial water purification, metal separation, catalytic processes, *etc.*

Generally, metal hydroxide-doped polymers can be used as the anion conductor, and specifically, metal hydroxide-doped poly(ethersulfone), polystyrene, vinyl-based polymers, poly(vinyl chloride), and poly(vinylidene fluoride), poly(tetrafluoroethylene), poly(benzimidazole), polyethylene glycol), *etc.* may be used.

The ionomer layer 55 according to the present disclosure may include a first resin layer 54 and a second resin layer 56 opposite to the first resin layer 54. Specifically, the first resin layer 54 may be disposed on the first surface 52a, and the second resin layer 56 may be disposed on the second surface 52b. Therefore, the ionomer layer 55 may be formed on the surface of the porous support 52.

FIG. 2 is a cross-sectional view showing a reinforced composite film according to another embodiment of the present disclosure. The parts described above and repeated descriptions are briefly described or omitted.

Referring to FIG. 2, the porous support 52 according to the present disclosure may include at least two or more sub-porous supports. Specifically, the porous support 52 may include a first sub-porous support 52_1 and a second sub-porous support 52_2 disposed on the first sub-porous support 52_1.

The first sub-porous support 52_1 and the second sub-porous support 52_2 may each independently be the same as or different from the porous support described above.

The thickness of the first sub-porous support 52_1 may be, for example, 1 $\mu$m to 50 $\mu$m, and the thickness of the second sub-porous support 52_2 may be 1 $\mu$m to 50 $\mu$m.

The porosity of each of the first sub-porous support 52_1 and the second sub-porous support 52_2 may be the same as or different from that of the porous support described above, and may also have the same or different configurations.

The first sub-porous support 52_1 may include the first surface 52a, and the second sub-porous support 52_2 may include the second surface 52b.

Unlike the above-described embodiment, the ionomer layer 55 according to the present disclosure may further include a third resin layer 58. The third resin layer 58 may be disposed between the first sub-porous support 52_1 and the second sub-porous support 52_2.

The equivalents of the ion conductors constituting the first to third resin layers 54, 56, and 58 may be the same as or different from one another. Like the ion conductors described above, the ion conductor constituting the resin layers may be any one selected from the group consisting of fluorine-based ion conductors, hydrocarbon-based ion conductors, and a mixture thereof.

## 2. Membrane-electrode assembly 100

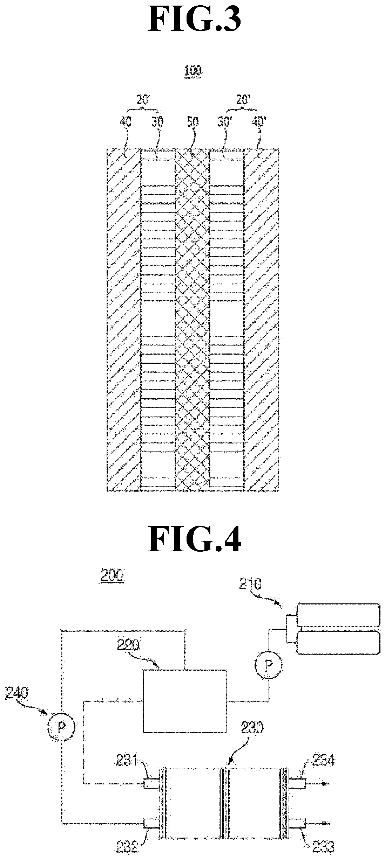

FIG. 3 is a cross-sectional view showing a membrane-electrode assembly according to an embodiment of the present disclosure. The parts described above and repeated descriptions are briefly described or omitted.

Referring to FIG. 3, the membrane-electrode assembly 100 according to the present disclosure includes the reinforced composite membrane 50 and the fuel cell electrodes (20, 20') disposed on both sides of the reinforced composite membrane 50, respectively.

The membrane-electrode assembly 100 according to an embodiment of the present disclosure may include the reinforced composite film 50 described above, the anode 20 disposed on the first surface (not shown), and the cathode 20' disposed on the second surface (not shown). The ionomer layer (not shown) according to the present disclosure may include a first resin layer and a second resin layer opposite to the first resin layer.

The electrodes (20, 20') include electrode substrates (40, 40') and the catalyst layers (30, 30') formed on surfaces of the electrode substrates (40, 40'), and the electrode substrates (40, 40') and may further include a microporous layer (not shown) containing conductive fine particles (e.g., carbon powder, carbon black, etc.) so as to facilitate diffusion of materials between the catalyst layers (30, 30') and the electrode substrates (40, 40').

In the membrane-electrode assembly 100, the electrode 20, which is disposed on one surface of the polymer electrolyte membrane 50 and causes an oxidation reaction that generates hydrogen ions and electrons from the fuel delivered to the catalyst layer 30 through the electrode substrate 40, is called an anode electrode.

The electrode 20', which is disposed on the other side of the polymer electrolyte membrane 50 and causes a reduction reaction that generates water from hydrogen ions supplied through the polymer electrolyte membrane 50 and the oxidizing agent delivered to the catalyst layer 30' through the electrode substrate 40', is called a cathode electrode.

The catalyst layers (30, 30') of the anode and cathode electrodes (20, 20') include a catalyst. As the catalyst, any catalyst that participates in the reaction of a battery and can be used as a catalyst for a fuel cell may be used. Preferably, a platinum-based metal may be used.

The platinum-based metal may include any one selected from the group consisting of platinum (Pt), palladium (Pd), ruthenium (Ru), iridium (Ir), osmium (Os), a platinum-M alloy, a non-platinum alloy, and a combination thereof, and more preferably, a combination of two or more metals selected from the platinum-based catalytic metal group may be used, but is not limited thereto, and any platinum-based catalytic metal that can be used in the art may be used without limitation.

The M may correspond to at least one selected from the group consisting of palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), and rhodium (Rh). Specifically, as the platinum alloy, two or more selected from the group consisting of Pt-Pd, Pt-Sn, Pt-Mo, Pt-Cr, Pt-W, Pt-Ru, Pt-Ru-W, Pt-Ru-Mo, Pt-Ru-Rh-Ni, Pt-Ru-Sn-W, Pt-Co, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, and a combination thereof may be used alone or in combination.

Additionally, as the non-platinum alloy, one or a mixture of two or more selected from the group consisting of Ir-Fe, Ir-Ru, Ir-Os, Co-Fe, Co-Ru, Co-Os, Rh-Fe, Rh-Ru, Rh-Os, Ir-Ru-Fe, Ir-Ru-Os, Rh-Ru-Fe, Rh-Ru-Os, and a combination thereof may be used.

As the catalyst itself, the catalyst itself (black) may be used or it may be used by supporting the same into a carrier.

## 3. Fuel cell (200)

FIG. 4 is a schematic diagram for explaining a fuel cell according to an embodiment of the present disclosure.

An embodiment of the present disclosure corresponds to a fuel cell including the membrane-electrode assembly.

Referring to FIG. 4, the fuel cell 200 according to the present disclosure may include a fuel supply unit 210, which supplies a mixed fuel in which fuel and water are mixed; a reforming unit 220, which reforms the mixed fuel to generate reformed gas containing hydrogen gas; a stack 230, in which the reformed gas containing hydrogen gas supplied from the reforming unit 220 causes an electrochemical reaction with an oxidizing agent to generate electrical energy; and an oxidizing agent supply unit 240, which transfers the oxidizing agent to the reforming unit 220 and the stack 230.

The stack 230 may be equipped with a plurality of unit cells which generate electrical energy by inducing an oxidation/reduction reaction between a reformed gas including hydrogen supplied from the reforming unit 220 and the oxidizing agent supplied from the oxidizing agent supplying unit 240.

Each unit cell, which refers to a unit cell that generates electricity, may include the membrane-electrode assembly for oxidizing/reducing the reformed gas containing hydrogen gas and oxygen in the oxidizing agent, and a separator (also called a bipolar plate, hereinafter referred to as "separator") for supplying a reformed gas containing hydrogen gas and the oxidizing agent to the membrane-electrode assembly. The separators are disposed on both sides of the membrane-electrode assembly with the membrane-electrode assembly placed at the center. In particular, the separators respectively located at the outermost side of the stack are also particularly called end plates.

Among the separators, the end plate may be equipped with a pipe-shaped first supply pipe 231 for injecting the reformed gas including hydrogen gas supplied from the reforming unit 220; and a pipe-shaped second supply pipe 232 for injecting oxygen gas; and the other end plate may be equipped with a first discharge pipe 233 for discharging reformed gas containing hydrogen gas, that is finally unreacted and remains in a plurality of unit cells, to the outside; and a second discharge pipe 234 for discharging the oxidizing agent, that is finally unreacted and remains in the unit cell, to the outside.

In the fuel cell, since the separator, the fuel supply unit, and the oxidizing agent supply unit constituting the electricity generation unit are used in a conventional fuel cell, a detailed description thereof will be omitted herein.

Hereinafter, embodiments of the present disclosure will be described in detail so that those skilled in the art can easily practice the same, but these are merely exemplary embodiments, and the scope of rights of the present disclosure is not limited thereto.

**[Manufacturing Preparation Example: Preparation of Porous Support]**

Porous supports were prepared according to the following Manufacturing Preparation Examples, Comparative Preparation Examples, and Reference Preparation Examples.

**<Preparatory Example 1: When only the first surface is reformed>**

The first surface of the porous support (e-PTFE) was reformed to have a hydroxy group (-OH) by the radio frequency (RF) plasma method by setting the oxygen gas flow rate to 20 sccm, the plasma power to 2 W, and the plasma treatment time to 5 seconds, and the second side opposite to the first side was not reformed. The porous support according to Preparatory Example 1 had a porosity of 70%, a thickness of 10 $\mu$m, and a pore size of 0.2 $\mu$m.

**<Preparatory Example 2: Second surface reformed less than the first surface>**

A porous support was prepared in the same manner as in Preparatory Example 1, except that the second surface was additionally reformed by setting the oxygen gas flow rate to 20 sccm, the plasma power to 2 W, and the plasma treatment time to 2 seconds. That is, the first surface was reformed so that the concentration of hydroxy groups per unit area became greater than that of the second surface.

**<Preparatory Example 3: Porous support including two sub-porous supports>**

A porous support was prepared in the same manner as in Preparation Example 1, except that a second sub-porous support (e-PTFE) was formed on the first sub-porous support (e-PTFE) to finally prepare a porous support. The first sub-porous support had a porosity of 65%, a thickness of 5 $\mu$m, and a pore size of 0.15 $\mu$m, and the second sub-porous support had a porosity of 75%, a thickness of 5 $\mu$m, and a pore size of 0.2 $\mu$m. The first surface of the first sub-porous support (e-PTFE) was reformed to have a hydroxy group (-OH) by the radio frequency (RF) plasma method. Specifically, alcohol was sprayed on the surface of the first sub-porous support by a method of forming a second sub-porous support on the first sub-porous support, and then a thermocompression bonding process using a roll press was used.

**<Comparative Preparation Example 1: Unreformed Porous Support>**

An unreformed porous support (e-PTFE) having a porosity of 70%, a thickness of 10 $\mu$m, and a pore size of

0.2 μm was prepared.

**<Reference Preparation Example 1: Porous support in which both the first and second surfaces are equally reformed>**

A porous support was prepared in the same manner as in Preparation Example 2, except that both the first and second surfaces were reformed by setting the oxygen gas flow rate to 100 sccm, the plasma power to 3 W, and the plasma treatment time to 5 seconds.

**[Experimental Example 1: Measurement of contact angle]**

A porous support was prepared according to Preparatory Preparation Example, and contact angles of distilled water were measured for each of the first and second surfaces.

**1) Method of measuring contact angles**

While maintaining 25°C and RH 40%, a syringe was filled with distilled water and a water droplet with a diameter of 3 mm was dropped on one side of the porous support, waited for 5 minutes for the water droplet to spread, and after 5 minutes, and the contact angle formed one side of the porous support and the water droplet formed by this was measured. The result indicates that as the contact angle becomes smaller, the more hydrophilic reforming is performed on one surface of the porous support.

**[Table 1]**

| Solvent: Distilled water | Porous Support | Preparatory Example 1 | Preparatory Example 2 | Preparatory Example 3 | Comparative Preparation Example 1 | Reference Preparation Example 1 |
|---|---|---|---|---|---|---|
| Contact | First Surface | 95 | 92 | 95 | 140 | 98 |
| Angle (°) | Second Surface | 140 | 120 | 140 | 140 | 98 |

**[Preparation Example: Preparation of reinforced composite membrane]**

Reinforced composite membranes were prepared according to the following Examples and Comparative Examples.

**<Example 1: Reinforced composite membrane including the porous support of Preparatory Example 1>**

The porous support according to Preparatory Example 1 was placed into a reaction container containing isopropyl alcohol at room temperature and pretreated for 5 minutes. The pretreated porous support was immersed in a 10 wt% Nafion solution (product name: Nafion D1021) dispersed in an emulsion state for 5 minutes, and then dried at 60°C for 4 hours to prepare a reinforced composite film.

**<Example 2: Reinforced composite membrane including the porous support of Preparatory Example 2>**

A reinforced composite membrane was prepared in the same manner as in Example 1, except that the porous support according to Preparatory Example 2 was used instead of the porous support according to Preparatory Example 1.

**<Example 3: Reinforced composite membrane including the porous support of Preparatory Example 3>**

A reinforced composite membrane was prepared in the same manner as in Example 1, except that a porous support according to Preparatory Example 3 was used instead of the porous support according to Preparatory Example 1.

**<Example 4: When the ion conductor is different unlike in Example 1>**

A reinforced composite membrane was prepared in the same manner as in Example 1, except that sulfonated polyether sulfone having an ion exchange capacity of 1.7 meq/g was used instead of the 10 wt% Nafion solution according to Preparation Example 1.

**<Comparative Example 1: Reinforced composite membrane including the porous support of Comparative Preparation Example 1>**

A reinforced composite membrane was prepared in the same manner as in Example 1, except that the porous support according to Comparative Preparation Example 1 was used instead of the porous support according to Preparatory Example 1.

**<Reference Example 1: Reinforced composite membrane including porous support of Reference Preparation Example 1>**

A reinforced composite membrane was prepared in the same manner as in Example 1, except that the porous support according to Reference Preparation Example 1 was used instead of the porous support according to Preparatory Example 1.

**<Comparative Example 2: When the porous support is different unlike as in Example 4>**

A reinforced composite membrane was prepared in the same manner as in Example 4, except that the porous support according to Comparative Preparation Example 1 was used instead of the porous support according to Preparatory Example 1.

**[Experimental Example 2: Measurements of water absorption and dimensional change in reinforced composite membrane]**

The water absorption rate and dimensional change rate in the reinforced composite membrane according to Preparation Example were measured.

**1) Water absorption rate**

The reinforced composite membrane according to Preparation Example was washed several times with deionized water, and the washed reinforced composite membrane was dried in a vacuum dryer at 120°C for 24 hours, and then weighed ($W_{dry}$). Then, the same membrane was immersed in deionized water for 24 hours, taken out, water present on the surface was removed, and the weight was measured again ($W_{wet}$). The water absorption rate was calculated by Equation 2 below.

[Equation 2]

$$\text{water uptake (\%)} = \frac{W_{wet} - W_{dry}}{W_{dry}} \times 100$$

**2) Dimensional change rate**

The method for measuring the dimensional change of the reinforced composite membrane according to Preparation Example was measured in the same manner as in the method of measuring the water absorption rate, except that the volume change of the reinforced composite membrane was measured instead of measuring the weight, and then calculated by Equation 3 below.

dimensional change rate (%) = (membrane area (wet) - membrane area (dry))/ membrane area (dry)) $\times$ 100　　[Equation 3]

[Table 2]

| | Example 1 | Example 2 | Example 3 | Example 4 | Comparative Example 1 | Reference Example 1 | Comparative Example 2 |
|---|---|---|---|---|---|---|---|
| Water Absorption Rate (%) | 32.6 | 35.3 | 32.5 | 40.2 | 30.3 | 48.4 | 35.9 |
| Dimensional Change Rate (%) | 6 | 8 | 4 | 8 | 6 | 16 | 8 |

Referring to Table 2, it can be seen that the Examples show significantly lower dimensional change rates and low water absorption rates compared to the those of Reference Example. Through this, it was confirmed that there is a problem in that the dimensional stability is deteriorated when both surfaces of the porous support are equally reformed, and it was confirmed that even when one surface or both surfaces of the porous support are reformed as in Examples, differential reforming by adjusting the plasma treatment time is a factor to increase dimensional stability.

**[Experimental Example 3: Performance evaluation of membrane-electrode assembly]**

An electrode slurry was directly coated on both sides of the reinforced composite membrane according to Preparation Example and then dried to prepare a membrane-electrode assembly. The ionic conductivity of the membrane-electrode assembly including the reinforced composite membrane according to Preparation Example was measured by the following method.

**1) Ionic Conductivity (experimental condition: 80°C/50%RH)**

For the membrane-electrode assembly including the reinforced composite membrane according to Preparation Example, the ionic conductivity was measured at a measurement temperature of 80°C using a measurement device (Solatron-1280 Impedance/Gain-Phase analyzer). Specifically, ionic conductivity was calculated by Equation 4 below after measuring ohmic resistance or bulk resistance using a Four point probe AC impedance spectroscopic method.

[Equation 4]

$$\sigma = L/RS$$

In Equation 4, $\sigma$ corresponds to the ionic conductivity (S/cm), R corresponds to the ohmic resistance of the electrolyte membrane ($\Omega$), L corresponds to the distance between electrodes (cm), and S corresponds to the area in the electrolyte through which a constant current flows ($cm^2$).

[Table 3]

| | Example 1 | Example 2 | Example 3 | Example 4 | Comparative Example 1 | Reference Example 1 | Comparative Example 2 |
|---|---|---|---|---|---|---|---|
| Ionic Conductivity (S/cm) | 0.041 | 0.045 | 0.042 | 0.028 | 0.038 | 0.064 | 0.023 |

Referring to Table 3, it can be confirmed that Examples have higher ionic conductivity than Comparative examples. Reference Example 1 showed high ionic conductivity, but as examined in Experimental Example 2, there was a problem in that dimensional stability was significantly deteriorated. According to the present disclosure, it is possible to provide a membrane-electrode assembly having high ion conductivity while satisfying dimensional stability within an appropriate range.

Although the preferred embodiments of the present disclosure have been described in detail above, the scope of the present disclosure is not limited thereto, and various modifications and improvements of those skilled in the art using the basic concept of the present disclosure defined in the following claims also fall within the scope of rights of the invention.

**Claims**

1. A reinforced composite membrane comprising:

   a porous support; and;
   an ionomer layer comprising an ion conductor filling the pores inside the porous support;
   wherein the porous support comprises a first surface and a second surface opposite to the first surface, and the first surface is reformed to contain a first hydrophilic functional group.

2. The reinforced composite membrane of claim 1, wherein the first hydrophilic functional group is any one selected from the group consisting of a hydroxyl group, a carboxyl group, a sulfuric acid group, and a phosphoric acid group.

3. The reinforced composite membrane of claim 1, wherein the second surface is not reformed to contain a hydrophilic functional group.

4. The reinforced composite membrane of claim 3, wherein the contact angle of a first solvent with respect to the first surface is lower than a contact angle of the first solvent with respect to the second surface.

5. The reinforced composite membrane of claim 4, wherein the contact angle of the first solvent with respect to the first surface is 75° to 105°, and the contact angle of the first solvent with respect to the second surface is 110° to 145°.

6. The reinforced composite membrane of claim 4, wherein the first solvent is any one selected from the group consisting of water, ethylene glycol, and a mixture thereof.

7. The reinforced composite membrane of claim 1, wherein the second surface is reformed to contain a second hydrophilic functional group.

8. The reinforced composite membrane of claim 7, wherein the second hydrophilic functional group is any one selected from the group consisting of a hydroxy group, a carboxyl group, a sulfuric acid group, and a phosphoric acid group.

9. The reinforced composite membrane of claim 7, wherein the contact angle of the second solvent with respect to the first surface is 75° to 105°, and the contact angle of the second solvent with respect to the second surface is 108° to 120°.

10. The reinforced composite membrane of claim 1, wherein the porous support comprises at least two or more sub-porous supports.

11. The reinforced composite membrane of claim 10, wherein the porous support comprises a first sub-porous support; and a second sub-porous support disposed on the first sub-porous support.

12. The reinforced composite membrane of claim 11, wherein the first sub-porous support comprises the first surface, and the second sub-porous support comprises the second surface.

13. The reinforced composite membrane of claim 1, wherein the ion conductor is any one selected from the group consisting of a fluorine-based ion conductor, a hydrocarbon-based ion conductor, and a mixture thereof.

14. A membrane-electrode assembly comprising:

    the reinforced composite membrane according to claim 1;
    an anode disposed on the first surface; and
    a cathode disposed on the second surface.

15. The membrane-electrode assembly according to claim 14, wherein the ionomer layer comprises:

    a first resin layer; and

a second resin layer opposite to the first resin layer.

**16.** A fuel cell comprising the membrane-electrode assembly according to claim 14.

# FIG.1

50

54

55

56

52a

52

52b

# FIG.2

50

54

55

58

56

52a

52_1(52)

52_2(52)

52b

# FIG.3

# FIG.4

## INTERNATIONAL SEARCH REPORT

International application No.

**PCT/KR2022/018646**

**A. CLASSIFICATION OF SUBJECT MATTER**

**H01M 8/1058**(2016.01)i; **H01M 8/106**(2016.01)i; **H01M 8/1053**(2016.01)i; **H01M 8/1004**(2016.01)i

According to International Patent Classification (IPC) or to both national classification and IPC

**B. FIELDS SEARCHED**

Minimum documentation searched (classification system followed by classification symbols)

H01M 8/1058(2016.01); C08J 5/22(2006.01); H01M 4/96(2006.01); H01M 8/10(2006.01); H01M 8/1018(2016.01); H01M 8/106(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 강화복합막 (reinforced membranes), 연료전지 (fuel cell), 친수성 작용기 (hydrophilic functional group), 이오노머 (ionomer), 다공성 지지체 (porous support), 막-전극 어셈블리 (MEA)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0033630 A (KOREA INSTITUTE OF SCIENCE AND TECHNOLOGY) 30 March 2020 (2020-03-30)<br>See abstract; paragraphs [0066]-[0067]; claims 1, 3 and 6; and figure 1. | 1-16 |
| Y | KR 10-2015-0140914 A (KOREA ATOMIC ENERGY RESEARCH INSTITUTE) 17 December 2015 (2015-12-17)<br>See abstract; paragraphs [0038]-[0039] and [0090]-[0092]; claims 1 and 4; and figure 2. | 1-16 |
| A | JP 2001-348439 A (JAPAN ATOM ENERGY RES. INST.) 18 December 2001 (2001-12-18)<br>See entire document. | 1-16 |
| A | KR 10-2017-0040018 A (KIM, Sung-Chul et al.) 12 April 2017 (2017-04-12)<br>See entire document. | 1-16 |
| A | KR 10-2011-0078573 A (PUSAN NATIONAL UNIVERSITY INDUSTRY-UNIVERSITY COOPERATION FOUNDATION) 07 July 2011 (2011-07-07)<br>See entire document. | 1-16 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 March 2023** | **17 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/018646**

| Patent document cited in search report | | | Publication date (day/month/year) | Patent family member(s) | | | Publication date (day/month/year) |
|---|---|---|---|---|---|---|---|
| KR | 10-2020-0033630 | A | 30 March 2020 | KR | 10-2184905 | B1 | 01 December 2020 |
| KR | 10-2015-0140914 | A | 17 December 2015 | KR | 10-1734841 | B1 | 15 May 2017 |
| JP | 2001-348439 | A | 18 December 2001 | JP | 4568848 | B2 | 27 October 2010 |
| KR | 10-2017-0040018 | A | 12 April 2017 | KR | 10-1754658 | B1 | 06 July 2017 |
| KR | 10-2011-0078573 | A | 07 July 2011 | KR | 10-1162472 | B1 | 03 July 2012 |

Form PCT/ISA/210 (patent family annex) (July 2022)